# EUROPEAN PATENT SPECIFICATION

(11) **EP 2 838 288 B1**
(45) Date of publication and mention of the grant of the patent: **03.07.2019**
(21) Application number: 13784508.7
(22) Date of filing: 28.03.2013
(51) Int. Cl.: H04W 16/10, H04W 52/14

(54) **INTERFERENCE COORDINATION METHOD AND DEVICE**
VERFAHREN UND VORRICHTUNG ZUR INTERFERENZKOORDINIERUNG
PROCÉDÉ ET DISPOSITIF DE COORDINATION DU BROUILLAGE

(30) Priority: 04.05.2012 CN 201210137123
(43) Date of publication of application: 18.02.2015
(73) Proprietor: Huawei Technologies Co., Ltd., Longgang District Shenzhen, Guangdong 518129 (CN)
(72) Inventor: XU, Min, Shenzhen Guangdong 518129, P.R. (CN); CHEN, Dong, Shenzhen Guangdong 518129, P.R. (CN)
(74) Representative: Pfenning, Meinig & Partner mbB
(86) International application number: PCT/CN2013/073316
(87) International publication number: WO 2013/163912

(56) References cited:
- WO-A1-2011/054374
- WO-A1-2011/100676
- CN-A- 102 202 311
- CN-A- 102 291 831
- CN-A- 102 378 206
- US-A1- 2010 285 795
- US-A1- 2011 237 286

## Description

### TECHNICAL FIELD

The present application relates to the communications field, and in particular, to an interference coordination method and apparatus.

### BACKGROUND

With the development of mobile communications technologies, a user has an increasing demand on quality of service. In a communications system, a system capacity is a key factor that affects the quality of service. To improve the system capacity, a micro cell (Small Cell) may be introduced in an existing macro cell to exponentially increase the number of cells in the system; in a case in which a throughput rate of each cell remains unchanged, the system capacity can increase exponentially (even tenfold). A Hetnet network (Heterogeneous Network, heterogeneous network) is formed by introducing the micro cell into the macro cell. On the Hetnet network, a plurality of micro cell base stations is deployed around a macro cell base station, so that a plurality of micro cells exists in a coverage range of the macro cell. The micro cells and the macro cell may be deployed at a same frequency or may be deployed at different frequencies. Because there may be an overlap area between macro cell network coverage and micro cell coverage, a problem of co-channel interference may occur when network deployment is performed on the micro cells and the macro cell at a same frequency. A micro cell base station may include a home base station, a Pico base station (pico base station), a Micro base station (micro base station), and the like.

When network deployment is performed on the micro cells and the macro cell at a same frequency, a terminal device accessing the micro cell may cause uplink interference to the macro cell base station and lead to a reduction of an uplink capacity of the macro cell.

US 2010/0285795 A1 discloses methods and devices for reducing interference in an uplink. This document provides a method of operating a communication system, the communication system comprising at least a macrocell base station and a femtocell base station that is within the coverage area of the macrocell base station, the method comprising providing an indication of the noise rise or interference at the macrocell base station to the femtocell base station; and the femtocell base station adjusting a maximum permitted transminssion power based on the indication.

US 2011/0237286 A1 refers to a radio base station and the network device. Herein, the radio base station includes a common control signal reception unit to receive a common control signal transmitted from each neighboring cell, a measurement unit to measure a reception level of the received common control signal, a recognition unit to recognize a transmission level of the common control signal at the neighboring cell and a type of the neighboring cell based on the received common control signal, a transmission level determination unit to determine a transmission level of a common control signal based on the reception level of the common control signal, the transmission level of the common control signal at the neighboring cell and the type of the neighboring cell and a common control signal transmission unit to transmit the common control signal at the transmission level determined by the transmission level determination unit.

WO 2011/054374A1 refers to power control setting in a low power network node. This document discloses a mechanism for setting power control settings for uplink power control in a network element controlling a communication connection to and from a user equipment, such as a base station or an eNodeB controlling a so-called femto cell (HeNB). The power control parameters of a HeNB are adjusted according to the position of the femto cell with respect to the served area of the "umbrella" Macro eNB. The HeNB may adjust the parameters autonomously, e. g. based on own measurements of the surrounding macro eNB, wherein path loss measurements, power control parameters and further parameters, such as a power margin and/or a worst case path-loss, provided by the network are considered. The HeNB adjusts the power control related parameters such that no UE connected to it transmits with more than a predetermined maximum power.

### SUMMARY

Multiple aspects of the present application provide an interference coordination method and apparatus. When a terminal device accesses a micro cell, uplink interference caused by the terminal device to a macro cell base station can be reduced. The invention is defined in the independent claims. Preferred embodiments are defined in the dependent claims.

According to an interference coordination method and apparatus and system provided in embodiments of the present application, power control can be performed on a terminal device accessing a micro cell, thereby reducing uplink interference to a macro cell base station and ensuring a system capacity of a macro cell.

### BRIEF DESCRIPTION OF DRAWINGS

To describe the technical solutions in the embodiments of the present application more clearly, the following briefly introduces the accompanying drawings required for describing the embodiments. Apparently, the accompanying drawings in the following description merely show some embodiments of the present application, and persons of ordinary skill in the art may still derive other drawings from these accompanying drawings without creative efforts.
FIG. 1 is a schematic flowchart of an interference coordination method according to an embodiment of the present application;
FIG. 2 is a schematic flowchart of an interference coordination method according to another embodiment of the present application;
FIG. 3 is a schematic flowchart of an interference coordination method according to another embodiment of the present application;
FIG. 4 to FIG. 6 are schematic diagrams of a network architecture according to another embodiment of the present application;
FIG. 7 is a schematic flowchart of an interference coordination method according to another embodiment of the present application;
FIG. 8 to FIG. 11 are schematic structural diagrams of an interference coordination apparatus according to another embodiment of the present application; and
FIG. 12 to FIG. 14 are schematic structural diagrams of an interference coordination apparatus according to another embodiment of the present application.

### DESCRIPTION OF EMBODIMENTS

The following descriptions propose specific details, such as specific system structures, interfaces and technologies for illustration rather than limitation, so as to understand the present invention thoroughly. However, persons skilled in the art should understand that, the present invention may also be implemented in other embodiments without these specific details. In other cases, detailed descriptions of an apparatus, a circuit, and a method that are well known are omitted, so as to prevent unnecessary details from obstructing descriptions of the present invention.

Technologies described in this specification may be applied to various communications systems, for example, current 2G and 3G communications systems and a next-generation communications system, for example, a Global System for Mobile Communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access) system, a Frequency Division Multiple Access (FDMA, Frequency Division Multiple Access) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other similar communications systems.

Various aspects are described in this specification with reference to a user equipment and/or a base station and/or a base station controller.

The user equipment may be a wireless terminal or a wired terminal. The wireless terminal may refer to a device that provides a user with voice and/or data connectivity, a handheld device with a radio connection function, or another processing device connected to a wireless modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, it may be a device such as a personal communication service (PCS, Personal Communication Service) phone, a cordless telephone, a Session Initiation Protocol (SIP) phone set, a wireless local loop (WLL, Wireless Local Loop) station, or a personal digital assistant (PDA, Personal Digital Assistant). The wireless terminal may also be called a system, a subscriber unit, a subscriber station, a mobile station, a mobile terminal, a remote station, an access point, a remote terminal, an access terminal, a user terminal, a user agent, a user device, or a user equipment.

The base station (for example, an access point) may refer to a device that communicates with a wireless terminal via one or more sectors on an air interface in an access network. The base station may be configured to mutually convert a received over-the-air frame and an IP packet and serve as a router between the wireless terminal and a rest portion of the access network, where the rest portion of the access network may include an Internet protocol (IP) network. The base station may further coordinate attribute management for the air interface. For example, the base station may be a base station (BTS, Base Transceiver Station) in GSM or CDMA, may be a base station (NodeB) in WCDMA, or may be an evolved NodeB (NodeB, eNB, or e-NodeB, evolved Node B) in LTE, which is not limited in the present invention.

The base station controller may be a base station controller (BSC, base station controller) in GSM or CDMA, or a radio network controller (RNC, Radio Network Controller) in WCDMA, which is not limited in the present invention.

In addition, the terms "system" and "network" may often be used interchangeably in this specification. The term "and/or" in this specification is only to describe an association relationship of associated objects and indicates that three relationships may exist. For example, A and/or B may represent the following three cases: A exists separately, both A and B exist, and B exists separately. In addition, the character "/" in this specification generally indicates that the former and latter associated objects are in an "or" relationship.

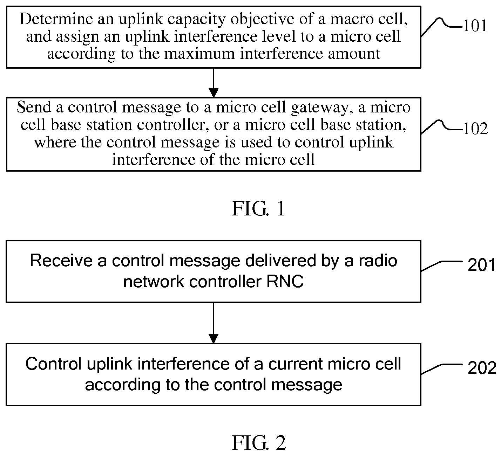

As shown in FIG. 1, an embodiment of the present application provides an interference coordination method.

101. Determine an uplink capacity target of a macro cell, and assign an uplink interference level to a micro cell according to the uplink capacity target.

This embodiment of the present application may be implemented by using an RNC (Radio Network Controller, radio network controller) in a communications system or may be implemented by using another network element device that has an RNC function, which is not limited herein.

When network deployment is performed on a plurality of micro cells in a coverage range of the macro cell and the macro cell at a same frequency, the macro cell may undergo co-channel interference of the plurality of micro cells. In this embodiment of the present application, an uplink interference level may be assigned to each micro station according to the uplink capacity target of the macro cell, so as to control uplink power of a UE in each micro cell and reduce co-channel interference caused by each micro cell to the macro cell.

It should be noted that the uplink capacity target in this embodiment of the present application may also be referred to as a maximum capacity loss, which is not limited herein.

102. Send a control message to a micro cell gateway, a micro cell base station controller, or a micro cell base station, where the control message is used to control uplink interference of the micro cell.

After acquiring the uplink interference level assigned by the RNC, the micro cell base station controls uplink power of a UE accessing the micro cell, so as to reduce the co-channel interference to the macro cell.

According to an interference coordination method provided in this embodiment of the present application, an uplink interference level is assigned to a micro cell according to an uplink capacity target of a macro cell, and each micro cell determines maximum target received total wideband power or a rise over thermal of the micro cell according to an uplink interference level that is assigned by an RNC to each micro cell, further performs power control on a terminal device accessing the micro cell, thereby reducing uplink interference to a macro cell base station and ensuring a system capacity of the macro cell.

As shown in FIG. 2, another embodiment of the present application provides an interference coordination method.

201. Receive a control message delivered by a radio network controller (RNC).

It should be noted that all embodiments of the present application are applicable to a micro cell base station on a Hetnet network, where the micro cell base station may include a home base station, a Pico base station, a Micro base station, and the like, and may also be applicable to a micro cell gateway or a micro cell base station controller.

202. Control uplink interference of a current micro cell according to the control message.

It should be noted that when network deployment is performed on a plurality of micro cells in a coverage range of a macro cell and the macro cell at a same frequency, the macro cell may undergo co-channel interference of the plurality of micro cells. By using the method provided in this embodiment, the micro cell base station can control uplink power of a UE in the micro cell by using an acquired control message, so as to reduce the co-channel interference caused by each micro cell to the macro cell.

According to an interference coordination method provided in this embodiment of the present application, power of each UE accessing a micro cell can be controlled by using an acquired control message delivered by a macro cell RNC, thereby reducing co-channel interference caused by each micro cell to a macro cell and ensuring a system capacity of the macro cell.

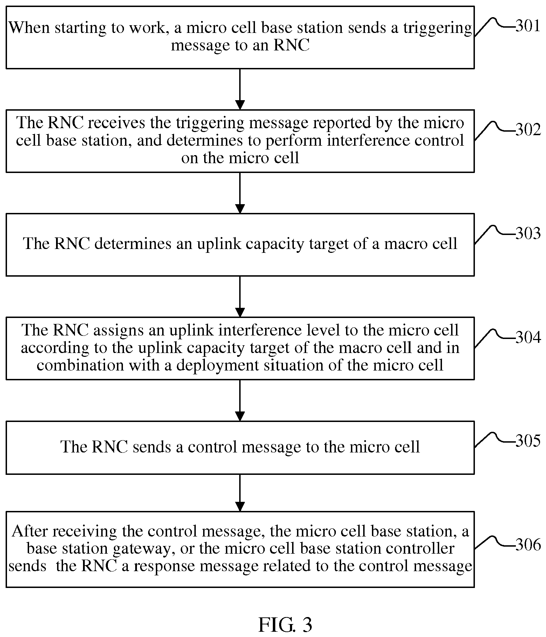

As shown in FIG. 3, another embodiment of the present application provides an interference coordination method.

301. When starting to work, a micro cell base station sends a triggering message to an RNC, where the triggering message is used to trigger the RNC to perform interference control on a current micro cell.

The RNC is a network element device in a communications system and is used to provide functions, such as mobility management, call processing, link management, and a handover mechanism, and may manage a macro cell base station and/or a micro cell base station.

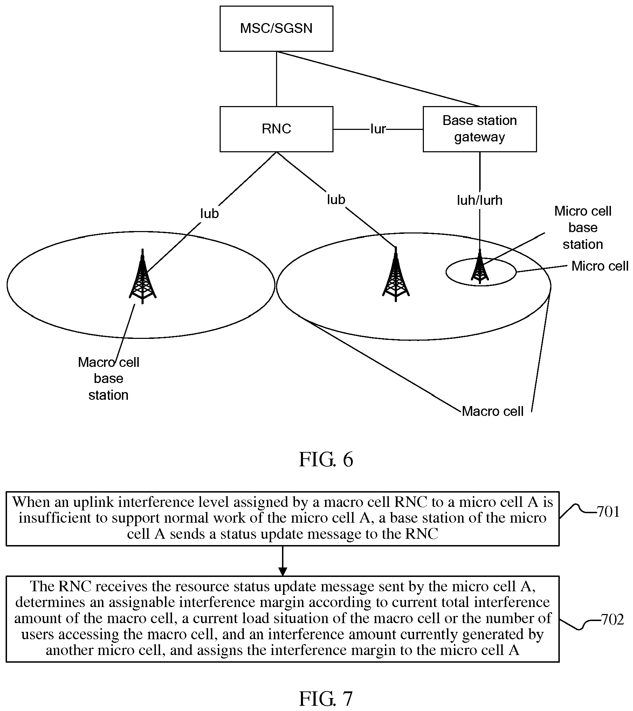

The control triggering message may be a resource status indication message or a resource status update message of the micro cell. In this embodiment, a scenario in which a micro cell base station is powered on to work is used as an example for description, that is, the triggering message sent by the micro cell base station to the RNC is a power-on registration message that belongs to the resource status indication message of the current micro cell. The resource status update message is a triggering message that is sent when an uplink interference level required by the micro cell changes. For a specific implementation method, reference may be made to step 701 in an embodiment shown in FIG. 7.

Optionally, the control triggering message further includes location information of the micro cell in a macro cell and/or coverage capability information of the micro cell. The location information of the micro cell in the macro cell may be a path loss value from the micro cell base station to the macro cell base station; information about different levels of distances, such as far, medium, and near distances away from the macro cell base station; or information about a level set according to another distance. The coverage capability information of the micro cell includes information about an RE extension (Range Extension, range extension) value of the micro cell base station, and/or information about power of the micro cell base station, and the like.

302. The RNC receives the triggering message reported by the micro cell base station, and determines to perform interference control on the micro cell.

It should be noted that steps 301 and 302 are optional steps.

303. The RNC determines an uplink capacity target of the macro cell.

For example, the uplink capacity target is used to represent a maximum uplink interference amount that the macro cell can bear, including maximum target received total wideband power (RTWP, Received Total Wideband Power) of the macro cell, or a maximum rise over thermal (ROT, Rise Over Thermal) that the macro cell can bear.

Optionally, the RNC may determine the uplink capacity target of the macro cell according to a load situation of the macro cell or the number of users accessing the macro cell. Specifically, the maximum target received total wideband power of the macro cell is determined according to configuration, then corresponding received total wideband power is obtained according to load of the macro cell or the number of users accessing the macro cell, and the maximum uplink interference amount that the macro cell can bear is obtained by subtracting received total wideband power from the maximum target received total wideband power.

304. The RNC assigns an uplink interference level to the micro cell according to the uplink capacity target of the macro cell and in combination with a deployment situation of the micro cell.

It should be noted that because the macro cell may undergo co-channel interference caused by the micro cell, the RNC assigns an uplink interference level to each micro cell base station in a coverage range of the macro cell, so as to ensure that interference to the macro cell caused when each micro cell works at the same time is within a bearing range of the macro cell, where the uplink interference level includes a maximum uplink interference amount or a rise over thermal (ROT) that can be generated by the micro cell base station, or maximum target received total wideband power of the micro cell.

For example, the RNC may assign the uplink interference level to each micro cell according to a deployment situation of each micro cell, and the deployment situation of the micro cell at least includes: the location information and/or the coverage capability information of the micro cell. The location information of the micro cell represents a situation of a distance between the micro cell and the macro cell; and the coverage capability information of the micro cell includes information, such as a range extension value of the micro cell and/or power of the micro cell, where the range extension value of the cell is used to represent a degree of range extension of the micro cell. Then, the step 304 may specifically include: 1) Assign the uplink interference level to the micro cell according to the uplink capacity target and in combination with the location information of the micro cell; if the distance between the micro cell and the macro cell is greater than or equal to a first distance threshold value, determine that the uplink interference level assigned to the micro cell is higher than or equal to a first uplink interference threshold value; and if the distance between the micro cell and the macro cell is smaller than or equal to the first distance threshold value, determine that the uplink interference level assigned to the micro cell is lower than or equal to the first uplink interference threshold value, where the first distance threshold value and the first uplink interference threshold value are preset; and/or

2) Assign the uplink interference level to the micro cell according to the uplink capacity target and in combination with the coverage capability information of the micro cell; if a coverage capability of the micro cell is higher than or equal to a first coverage threshold value, determine that the uplink interference level assigned to the micro cell is lower than or equal to a second uplink interference threshold value; and if the coverage capability of the micro cell is lower than or equal to the first coverage threshold value, determine that the uplink interference level assigned to the micro cell is higher than or equal to the second uplink interference threshold value, where the first coverage threshold value and the second uplink interference threshold value are preset.

It should be noted that in an actual application, the number of preset threshold values may be increased to improve precision of assigning the uplink interference level to the micro cell. For example, the following methods may be used when the RNC assigns the uplink interference level to each micro cell.
1) For example, the RNC may set, according to the distance between the micro cell and the macro cell, two distance threshold values that are denoted as a first distance threshold value and a second distance threshold value, where the first distance threshold value is greater than the second distance threshold value; when the distance between the micro cell and the macro cell is greater than or equal to the first distance threshold value, it is determined that a level of the distance between the micro cell and the macro cell base station is "far", and an uplink interference level assigned to the micro cell is the highest; when the distance between the micro cell and the macro cell is less than or equal to the second distance threshold value, it is determined that the level of the distance between the micro cell and the macro cell base station is "near", and the uplink interference level assigned to the micro cell is the lowest; and another level of the distance between the micro cell and the macro base station is "medium", and an uplink interference level assigned to the micro cell is between that assigned to the micro cell with the "far" distance level and that assigned to the micro cell with the "near" distance level.
2) It should be noted that range extension RE is a technology in which signal quality of the micro cell measured by a UE is increased by a certain amount to enable the UE to access to or switch to the micro cell more easily, so as to expand a coverage range of the micro cell.

For example, when the uplink interference level is assigned to the micro cell according to the range extension value of the micro cell, for four micro cells with a range extension value 9 dB, a range extension value 6 dB, a range extension value 3 dB, and a range extension value 0 dB, an uplink interference level assigned by the RNC to the micro cell with the range extension value 9 dB is the lowest, an uplink interference level assigned to the micro cell with the range extension value 0 dB is the highest, and an uplink interference level assigned to the micro cell with the range extension value 6 dB is lower than an uplink interference level assigned to the micro cell with the range extension value 3 dB.

3) For example, when the uplink interference level is assigned to the micro cell according to the power of the micro cell base station, the RNC may set, according to the power of the micro cell base station, two power threshold values that are denoted as a first power threshold value and a second power threshold value, where the first power threshold value is greater than the second power threshold value; when the power of the micro cell base station is greater than or equal to the first power threshold value, it is determined that a power level of the micro cell base station is "high", and an uplink interference level assigned to the micro cell is the lowest; when the power of the micro cell base station is lower than or equal to the second power threshold value, it is determined that the power level of the micro cell base station is "low", and the uplink interference level assigned to the micro cell is the highest; and it is determined that another power level of the micro cell base station within a power range is "medium", and an uplink interference level assigned to the micro cell is between that assigned to the micro cell with the "high" power level and that assigned to the micro cell with the "low" power level.

It should be noted that the foregoing example is merely an exemplary description of assigning the uplink interference level to the micro cell by the RNC, and an actual application is not limited thereto.

305. The RNC sends a control message to the micro cell.

It should be noted that the RNC may send the control message to a micro cell gateway, a micro cell base station controller, or the micro cell base station, where the control message is used by the micro cell base station to determine a maximum uplink interference level that can be generated by the current micro cell and includes maximum target received total wideband power or a rise over thermal of the current micro cell, so as to implement control of uplink interference.

For ease of understanding, in this embodiment of the present application, sending the control message to the micro cell base station is used as an example, and the following two implementation methods are provided for the micro cell base station to determine the maximum uplink interference level that can be generated by the micro cell base station.
1) The RNC adds a power control parameter in the control message sent to the micro cell base station, where the power control parameter includes one or more of the following: maximum target received total wideband power of the macro cell, the rise over thermal of the macro cell, different parameter levels, a proportionality coefficient corresponding to each parameter level, and classification information of each parameter level.

After receiving the control message, the micro cell base station acquires the power control parameter from the control message, determines a corresponding parameter level according to location information and/or coverage capability information of the micro cell base station, so as to determine a proportionality coefficient, and determines, according to the determined proportionality coefficient and the maximum target received total wideband power of the macro cell, the maximum uplink interference level that can be generated by the micro cell base station, so as to implement control of the uplink interference of the micro cell.

For example, the RNC may classify distances between each micro cell base station and the macro cell base station into three distance levels, which are "far", "medium", and "near", and each level includes a distance range value (that is, the classification information of the foregoing parameter levels) that is used to determine a level; for example, the RNC may set, according to the distance between the micro cell and the macro cell, two distance threshold values that are denoted as a first distance threshold value and a second distance threshold value, where the first distance threshold value is greater than the second distance threshold value; when the distance between the micro cell and the macro cell is greater than or equal to the first distance threshold value, it is determined that a level of the distance between the micro cell and the macro base station is "far"; when the distance between the micro cell and the macro cell is smaller than or equal to the second distance threshold value, it is determined that the level of the distance between the micro cell and the macro cell base station is "near"; and another level of the distance between the micro cell and the macro cell base station is "medium", where the first distance threshold value may be 178 m, the second distance threshold value may be 107 m, and a spacing between macro base stations may be 500 m; or,
the micro cell base station measures signal quality of the macro cell to determine the distance between the micro cell and the macro base station; for example, a first signal threshold value and a second signal threshold value are preset, where the first signal threshold value is less than the second signal threshold value; when the signal quality of the macro cell is lower than or equal to the first signal threshold value, it is determined that a level of the distance between the micro cell and the macro base station is "far"; when the signal quality of the macro cell is higher than or equal to the second signal threshold value, it is determined that the level of the distance between the micro cell and the macro base station is "near"; and for other measured signal quality of the macro cell, it is determined that the level of the distance between the micro cell and the macro base station is "medium", where the first signal threshold value is -80 dB, and the second signal threshold value is -66 dB. In addition, a corresponding proportionality coefficient (that is, proportionality coefficients corresponding to the foregoing different parameter levels) is set for each parameter level, where a proportionality coefficient corresponding to the "far" distance level > a proportionality coefficient corresponding to the "medium" distance level > a proportionality coefficient corresponding to the "near" distance level. For example, the proportionality coefficient corresponding to the "far" distance level is 0.7, the proportionality coefficient corresponding to the "medium" distance level is 0.5, and the proportionality coefficient corresponding to the "near" distance level is 0.3. After acquiring the power control parameter delivered by the RNC, the micro cell base station determines the distance between the micro cell base station and the macro base station by measuring a path loss value from the micro cell base station to the macro cell base station, or determines the distance between the micro cell base station and the macro base station by measuring the signal quality of the macro cell; performs a comparison between the measured value and a corresponding range value of a distance level to determine a corresponding parameter level and eventually determine a corresponding proportionality coefficient; and multiplies the proportionality coefficient by the maximum target received total wideband power and/or the rise over thermal of the foregoing macro cell to obtain a maximum uplink interference level that can be generated by the micro cell base station.

For example, the RNC may classify power used by each micro cell base station into three power levels, which are "high", "medium", and "low", and each level includes a power range value (that is, the classification information of the foregoing parameter level) used to determine a level; for example, corresponding to the three power levels, two power threshold values are preset, a first power threshold value and a second power threshold value, where the first power threshold value is greater than the second power threshold value; when the power of the micro cell base station is higher than or equal to the first power threshold value, it is determined that a power level of the micro cell base station is "high"; when the power of the micro cell base station is lower than or equal to the second power threshold value, it is determined that the power level of the micro cell base station is "low"; and it is determined that another power level of the micro cell base station is "medium", where the first power threshold value is 37 dBm, and the second power threshold value is 24 dBm). In addition, a corresponding proportionality coefficient (that is, proportionality coefficients corresponding to the foregoing different parameter levels) is set for each level. After receiving the power control parameter delivered by the RNC, the micro cell base station determines a corresponding parameter level by determining a power value of the micro cell base station, eventually determines a corresponding proportionality coefficient, and multiplies the proportionality coefficient by the maximum target received total wideband power and/or the rise over thermal of the foregoing macro cell to obtain the maximum uplink interference level that can be run by the micro cell base station.

For example, the RNC may classify micro cells into four levels according to a range extension value of each micro cell base station: a range extension value 9 dB, a range extension value 6 dB, a range extension value 3 dB, and a range extension value 0 dB (or four range extension levels, "high", "medium", "low", and "none"), and set a corresponding proportionality coefficient (that is, proportionality coefficients corresponding to the foregoing different parameter levels) for each range extension level. After receiving the power control parameter delivered by the RNC, the micro cell base station determines a corresponding parameter level by determining a range extension value, eventually determines a corresponding proportionality coefficient, and multiplies the proportionality coefficient by the maximum target received total wideband power and/or the rise over thermal of the foregoing macro cell to obtain the maximum uplink interference level that can be run by the micro cell base station.

Preferably, for example, the RNC may classify different levels in combination with both the location information and the coverage capability information and set a corresponding proportionality coefficient (that is, proportionality coefficients corresponding to the foregoing different parameter levels) for each level. For example, a level is set in combination with the location information and power in the coverage capability capability, and a final level number is obtained after level numbers of three different measurement parameters are multiplied. For example, the level is set by using both the location information and power information, where there are three location information levels and three power levels, and therefore nine levels are set. First, the location information is determined, and the nine levels are classified into three groups corresponding to different location information levels; and then according to a power level, it is determined that which level a corresponding group corresponds to. After receiving the power control parameter delivered by the RNC, the micro cell base station determines a corresponding parameter level by determining the location information and the coverage capability information of the micro cell base station, eventually determines a corresponding proportionality coefficient, and multiplies the proportionality coefficient by the maximum target received total wideband power and/or the rise over thermal of the foregoing macro cell to obtain the maximum uplink interference level that can be run by the micro cell base station.

Optionally, an OAM (Operation Administration and Maintenance, operation administration and maintenance) network element may preset a proportionality coefficient for the micro cell according to the location information and/or the coverage capability information of the micro cell and configure the proportionality coefficient for the micro cell base station. Therefore, after acquiring the maximum target received total wideband power and/or the rise over thermal of the macro cell, the micro cell base station may determine, according to the pre-configured proportionality coefficient, the maximum uplink interference level that can be run by the micro cell base station.

A process of determining the maximum uplink interference level by using the foregoing method and according to the power control parameter delivered by the RNC is processed by the micro cell base station, so that operation complexity of the RNC can be reduced.

2) This embodiment of the present application further provides another implementation method for determining, by the micro cell base station, a maximum uplink interference level that can be generated by the micro cell base station.

The RNC receives location information and/or coverage capability information that is reported by each micro cell and assigns an uplink interference level to each micro cell in combination with the uplink capacity target of the macro cell, where the uplink interference level of the micro cell includes maximum target received total wideband power or a rise over thermal of the micro cell. The micro cell base station may add the location information and/or the coverage capability information of the micro cell in the triggering message (referring to step 301) and then sends the triggering message to the RNC.

Optionally, the location information and/or the coverage capability information of each micro cell may also be configured in a background by the OAM (Operation Administration and Maintenance, operation administration and maintenance) network element for a macro cell RNC to perform invoking, so as to determine the uplink interference level of each micro cell.

The RNC adds the determined uplink interference level of each micro cell in the control message and separately sends the control message to a corresponding micro cell base station, and the micro cell base station determines the maximum target received total wideband power or the rise over thermal of the current micro cell according to the received uplink interference level, so as to perform interference control.

By using the foregoing method, the RNC determines the uplink interference level of each micro cell and informs a corresponding micro cell of the uplink interference level, and the micro cell can directly perform power control according to the received uplink interference level, so as to reduce an interference control delay.

306. After receiving the control message, the micro cell base station, the micro cell gateway, or the micro cell base station controller sends the RNC a response message related to the control message, where the response message is used to inform the RNC that the micro cell has received the control message.

It should be noted that if the RNC does not receive a response message returned by the micro cell base station within a preset period of time (for example, the RNC fails to inform each micro cell base station of the uplink interference level due to a reason, such as communications network congestion), the RNC may inform again the micro cell base station, the base station gateway, or the micro cell base station controller of the uplink interference level assigned to each cell again.

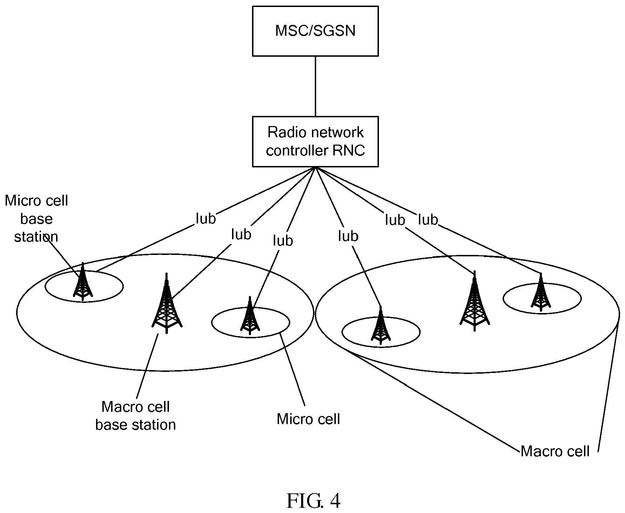

It should be noted that, in this embodiment, an architectural pattern between a micro cell base station and a macro cell base station at least includes three forms shown in FIG. 4 to FIG. 6, where an MSC (Mobile Switching Center, mobile switching center)/SGSN (serving GPRS support node, serving GPRS support node) is used to manage a voice service/data service on a communications network.

In an architecture diagram shown in FIG. 4, a micro cell base station and a macro cell base station share a same RNC. In this case, the micro cell base station has a function similar to that of the macro cell base station, and the micro cell base station directly interacts with an RNC through an Iub interface.

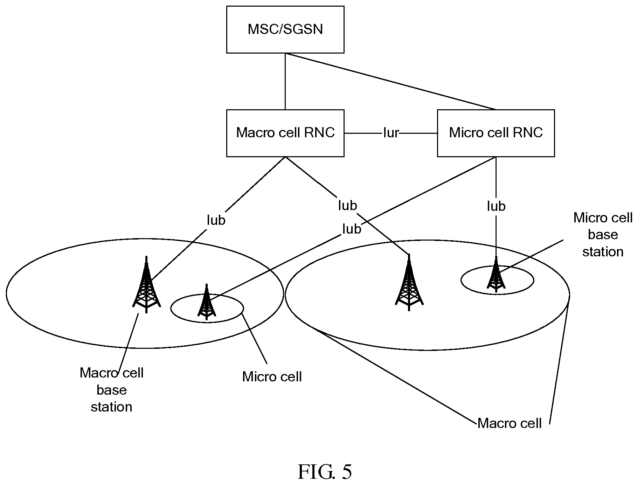

In an architecture diagram shown in FIG. 5, on a communications network, an independent RNC (micro cell RNC) is configured to manage a micro cell, where the RNC is connected to a macro cell RNC through an Iur interface, a micro cell base station is connected to the micro cell RNC through an Iub interface, and the micro cell RNC needs to forward information when the micro cell base station perform information interaction with the macro cell RNC.

In an architecture diagram shown in FIG. 6, on a communications network, a base station gateway is configured to perform centralized management or information forwarding for a micro cell; and a micro cell base station is connected to the base station gateway through an Iuh or Iurh interface, the base station gateway is connected to an RNC through an Iur interface, and interaction information between the micro cell base station and the RNC needs to be forwarded by the base station gateway.

The interference coordination method provided in this embodiment is applicable to the foregoing three different network architectures. It should be emphasized that for different network architectures, ways for the RNC and the micro cell base station to interact information or message types are different. For an architecture shown in FIG. 5, the RNC in this embodiment refers to the macro cell RNC.

It should be noted that in this embodiment of the present application, the method on a micro cell base station side may also be implemented by a micro cell gateway or a micro cell base station controller. For example, in the architecture diagram shown in FIG. 6, the macro cell RNC may perform interference control on the micro cell by sending a control message to the micro cell gateway.

According to an interference coordination method provided in this embodiment of the present application, an uplink capacity target of a macro cell can be assigned to each micro cell to determine an uplink interference level that can be generated by each micro cell base station; and a control message is sent to the micro cell base station, so that each micro cell base station determines a maximum uplink interference level of the micro cell base station according to an assigned uplink interference level, and further performs power control on a terminal device accessing the micro cell, thereby reducing uplink interference to a macro cell base station and ensuring a system capacity of the macro cell.

Preferably, in view of that there may be a plurality of micro cells in a coverage range of a macro cell, power-on and power-off time of each micro cell is different, and a load capacity of each micro cell or the macro cell, or the number of users accessing each micro cell or the macro cell may change, on a basis of the embodiment in FIG. 3, this embodiment further provides an optimization method shown in FIG. 7 to ensure that the macro cell and each micro cell can work normally in real time.

701. When an uplink interference level assigned by a macro cell RNC to a micro cell A is insufficient to support normal work of the micro cell A, a base station of the micro cell A sends a resource status update message to the RNC, where the resource status update message is used to trigger the RNC to reassign an uplink interference level to the micro cell A, so as to ensure that the micro cell A can work normally.

It should be noted that, that the uplink interference level assigned to the micro cell A is insufficient to support the normal work of the micro cell A includes but is not limited to the following scenarios: When power configured by the micro cell A for all UEs or a rise over thermal measured by the micro cell A exceeds the uplink interference level assigned by the macro cell to the micro cell A, there is another UE that requests access to the micro cell A.

The micro cell A is any micro cell in the micro cells. Reasons for that the micro cell A cannot work normally at least include that: the assigned uplink interference level is insufficient due to that load of the micro cell A is too large or the number of users accessing the micro cell A is excessive; or the assigned uplink interference level is insufficient due to another reason cause, which is not limited herein.

702. The RNC receives the resource status update message sent by the micro cell A, determines an assignable interference margin according to a current total interference amount of the macro cell, a current load situation of the macro cell or the number of users accessing the macro cell, or an interference amount currently generated by another micro cell (a remaining micro cell except the micro cell A in a coverage range of the macro cell), and assigns the interference margin to the micro cell A.

According to step 701 and step 702, when the uplink interference level assigned to the micro cell A is insufficient to support the normal work of the micro cell A, the base station of the micro cell A can actively send the resource status update message to the macro cell RNC, so that the RNC increases the uplink interference level assigned to the micro cell A under a precondition that a maximum interference amount that the RNC can accept is not exceeded, so as to ensure maximization of a system capacity of the macro cell.

Optionally, to ensure that the macro cell and each micro cell can work normally, an embodiment of the present application further provides another method in which the macro cell RNC can actively perform interference control on each micro cell base station periodically. The method is specifically as follows:
1) The RNC receives load information of each micro cell, and/or the number of users accessing the micro cell, and/or an uplink interference level of the current micro cell (that is, maximum target received total wideband power or a rise over thermal), where the load information of each micro cell, and/or the number of users accessing the micro cell, and/or the uplink interference level of the current micro cell is periodically reported by each micro cell base station.
2) The RNC determines an assignable interference margin according to an uplink interference level collected by a macro cell network, and/or a load situation of the macro cell network or the number of users accessing the macro cell network, and/or the uplink interference level that has been assigned to the micro cell, and/or the number of users accessing the micro cell (the number of users accessing the micro cell or the load situation that is periodically reported by the micro cell), and assigns the interference margin to the micro cell in which an uplink interference level is insufficient to support the normal work of the current micro cell.

For example, when load of the macro cell network or the number of users accessing the macro cell network does not exceed a target value that is originally set, an assignable uplink interference level is calculated according to a correspondence between cell load and an uplink capacity, and the uplink interference level that has been assigned to all micro cells is subtracted from the assignable uplink interference level to obtain a total assignable interference margin. If the number of users accessing the micro cell to which the uplink interference level has been assigned or a load amount of the micro cell to which the uplink interference level has been assigned does not reach a maximum value, a corresponding interference amount is added, so as determine the assignable interference margin.

It should be noted that the RNC may periodically perform statistics, according to a preset timer, on information, such as the load situation of the macro cell network or the number of users accessing the macro cell network, the uplink interference level that has been assigned to the micro cell, and the load reported by the micro cell base station, so as to periodically determine an assignable interference margin and assign the interference margin to the micro cell in which uplink interference level is insufficient to support the normal work of the current micro cell, so that the micro cell can work normally.

By using the foregoing method, the RNC can dynamically assign an interference margin to each micro cell in the coverage range of the macro cell to ensure that the macro cell and each micro cell can work normally.

According to an interference coordination method provided in this embodiment of the present application, an uplink capacity target of a macro cell can be assigned to each micro cell, and an uplink interference level that has been assigned to each micro cell may be adjusted according to a real-time status of each micro cell; and each micro cell determines maximum target received total wideband power or a rise over thermal of each micro cell according to an assigned interference component, so as to reduce uplink interference to a macro cell base station and ensure a system capacity of the macro cell.

The interference coordination method provided in this embodiment is applicable to the three different network architectures in the third embodiment. It should be emphasized that for different network architectures, ways for the RNC and the micro cell base station to interact information or message types are different.

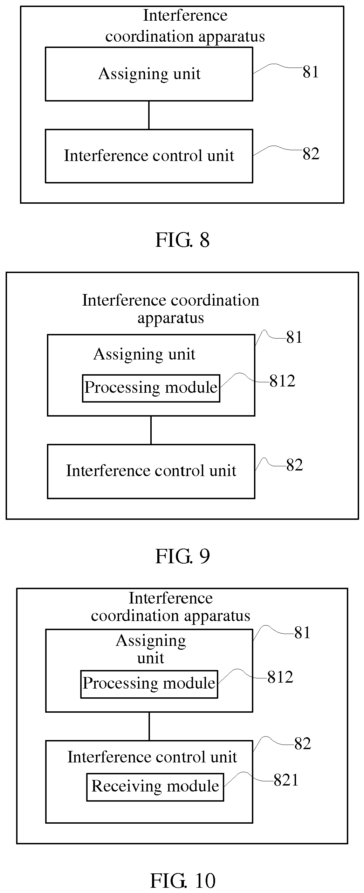

Another embodiment of the present application provides an interference coordination apparatus, which may be an RNC or a part of an RNC on a macro cell network and can implement the foregoing method embodiments. As shown in FIG. 8, the apparatus includes: an assigning unit 81 and an interference control unit 82.

The assigning unit 81 is configured to determine an uplink capacity target of a macro cell and assign an uplink interference level to a micro cell according to the uplink capacity target.

The interference control unit 82 is configured to send a control message to a micro cell gateway, a micro cell base station controller, or a micro cell base station, where the control message is used to control uplink interference of the micro cell.

For example, the uplink capacity target of the macro cell determined by the assigning unit 81 includes maximum target received total wideband power or a rise over thermal (ROT) of the macro cell.

Further, as shown in FIG. 9, the assigning unit 81 includes a processing module 812.

The processing module 812 is configured to assign the uplink interference level to the micro cell according to the uplink capacity target and in combination with a deployment situation of the micro cell.

Preferably, the processing module 812 is specifically configured to assign the uplink interference level to the micro cell according to location information of the micro cell and/or coverage capability information of the micro cell. The coverage capability information of the micro cell includes: power of the micro cell and/or a range extension value of the micro cell, where the range extension value of the cell is used to represent a range extension degree of the micro cell.

For example, the processing module 812 is specifically configured to, if a distance between the micro cell and the macro cell is greater than or equal to a first distance threshold value, determine that the uplink interference level assigned to the micro cell is higher than or equal to a first uplink interference threshold value; and if the distance between the micro cell and the macro cell is smaller than or equal to the first distance threshold value, determine that the uplink interference level assigned to the micro cell is lower than or equal to the first uplink interference threshold value, where the first distance threshold value and the first uplink interference threshold value are preset; and/or
the processing module 812 is further configured to, if a coverage capability of the micro cell is higher than or equal to a first coverage threshold value, determine that the uplink interference level assigned to the micro cell is lower than or equal to a second uplink interference threshold value; and if the coverage capability of the micro cell is lower than or equal to the first coverage threshold value, determine that the uplink interference level assigned to the micro cell is higher than or equal to the second uplink interference threshold value, where the first coverage threshold value and the second uplink interference threshold value are preset.

Preferably, the control message sent by the interference control unit 82 carries an uplink power control parameter, where the uplink power control parameter includes one or more of the following: maximum target received total wideband power of the macro cell, a rise over thermal of the macro cell, different parameter levels, a proportionality coefficient corresponding to each parameter level, and classification information of each parameter level, where the uplink power control parameter is used by the micro cell to determine the uplink interference level of the micro cell.

Optionally, as shown in FIG. 10, the interference control unit 82 further includes: a receiving module 821, configured to receive location information and/or coverage capability information that is reported or configured by the micro cell gateway, the micro cell base station controller, or the micro cell base station, and assign the uplink interference level to the micro cell, where the uplink interference level of the micro cell includes maximum target received total wideband power or a rise over thermal of the micro cell.

The interference control unit 82 is specifically configured to carry the maximum target received total wideband power of the micro cell or the rise over thermal of the micro cell in the control message, send the control message to the micro cell, and control the uplink interference of the micro cell.

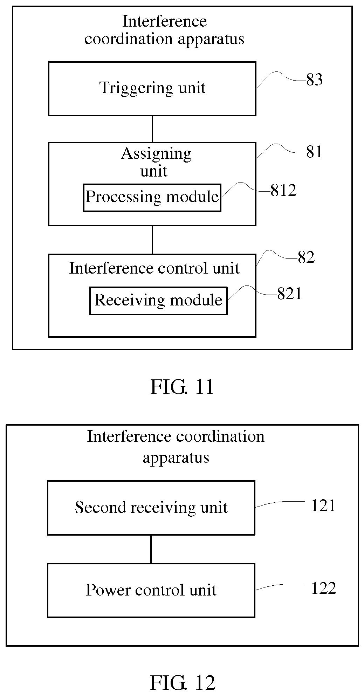

Further, as shown in FIG. 11, the interference coordination apparatus further includes: a triggering unit 83, configured to acquire a triggering message reported by the micro cell to trigger an interference control operation for the micro cell, where the triggering message includes a resource status indication message or a resource status update message that is sent by the micro cell.

According to an interference coordination apparatus provided in this embodiment of the present application, an uplink capacity target of a macro cell can be assigned to each micro cell to determine an uplink interference level that each micro cell base station can generate; and a control message is sent to the micro cell base station, so that each micro cell base station determines a maximum uplink interference level of the micro cell base station according to an assigned uplink interference level, so as to perform power control for a terminal device accessing the micro cell, thereby reducing uplink interference to a macro cell base station and ensuring a system capacity of the macro cell.

Another embodiment of the present application provides an interference coordination apparatus, which may be a micro cell base station; a micro cell gateway; a micro cell base station controller; or a part of a micro cell base station, a micro cell gateway, or a micro cell base station controller. As shown in FIG. 12, the apparatus includes: a second receiving unit 121 and a power control unit 122.

The second receiving unit 121 is configured to receive a control message delivered by a radio network controller (RNC).

The power control unit 122 is configured to control uplink interference of a current micro cell according to the control message.

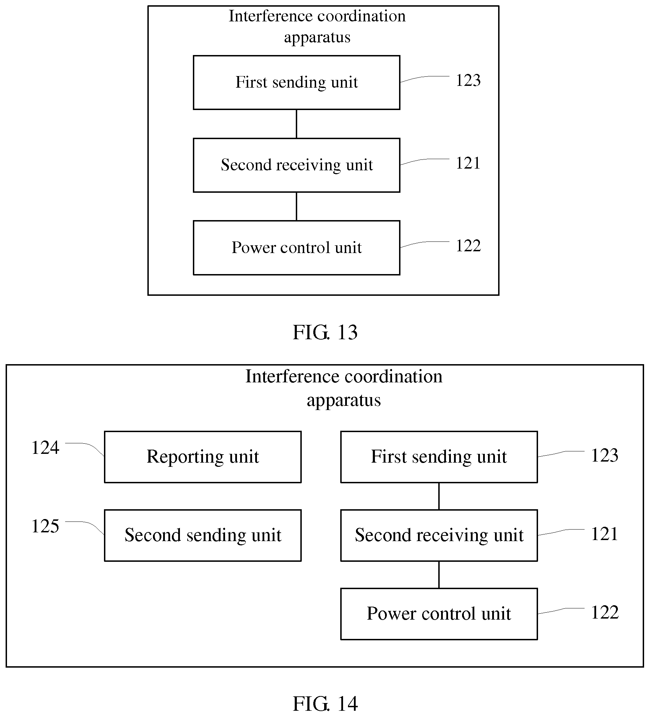

Further, as shown in FIG. 13, the interference coordination apparatus further includes a first sending unit 123, configured to send the RNC a response message related to the control message.

For example, the control message received by the second receiving unit 121 carries an uplink power control parameter, where the uplink power control parameter includes one or more of the following: maximum target received total wideband power of the macro cell, a rise over thermal of the macro cell, different parameter levels, a proportionality coefficient corresponding to each parameter level, and classification information of each parameter level.

The power control unit 122 is specifically configured to determine a corresponding parameter level according to location information and/or coverage capability information of the current micro cell, so as to determine a proportionality coefficient; and determine maximum target received total wideband power of the micro cell according to the proportionality coefficient and the maximum target received total wideband power of the macro cell.

The power control unit 122 is further configured to determine the corresponding parameter level according to the location information and/or the coverage capability information of the current micro cell, so as to determine the proportionality coefficient; and determine a rise over thermal of the current micro cell according to the proportionality coefficient and the rise over thermal of the macro cell.

Further, as shown in FIG. 14, the apparatus further includes a reporting unit 124 and a second sending unit 125.

The reporting unit 124 is configured to report the location information and/or the coverage capability information of the current micro cell to the RNC, so that the RNC assigns an uplink interference level to the current micro cell, where the uplink interference level of the micro cell includes the maximum target received total wideband power or the rise over thermal of the micro cell; and carry the maximum target received total wideband power or the rise over thermal of the current micro cell in the control message, and send the control message to the current micro cell.

Then, the power control unit 122 is specifically configured to acquire the maximum target received total wideband power or the rise over thermal of the current micro cell from the control message, and control the uplink interference of the current micro cell.

The second sending unit 125 is configured to send a triggering message to the RNC, where the triggering message is used to trigger the RNC to perform interference control on the current micro cell, where the triggering message includes a resource status indication message or a resource status update message.

According to an interference coordination apparatus provided in this embodiment of the present application, power of each UE accessing a micro cell can be controlled by using an acquired control message delivered by a macro cell RNC, thereby reducing co-channel interference caused by each micro cell to a macro cell and ensuring a system capacity of the macro cell.

In another embodiment of the present invention, a communications system is further provided and includes the interference coordination apparatus shown in FIG. 8 to FIG. 11 and the interference coordination apparatus shown in FIG. 12 to FIG. 14, which can implement all the foregoing embodiments provided in the present application. The interference coordination apparatus shown in FIG. 8 to FIG. 11 may be an RNC or a part of an RNC on a macro cell network, and the interference coordination apparatus shown in FIG. 12 to FIG. 14 may be a micro cell base station; a micro cell gateway; a micro cell base station controller; or a part of a micro cell base station, a micro cell gateway, or a micro cell base station controller. According to a communications system provided in this embodiment of the present application, an uplink capacity target of a macro cell can be assigned to each micro cell to determine an uplink interference level that each micro cell base station can generate; and power control is performed for a terminal device accessing the micro cell, thereby reducing uplink interference to a macro cell base station and ensuring a system capacity of the macro cell.

It may be clearly understood by persons skilled in the art that, for the purpose of convenient and brief description, division of the foregoing functional modules is merely used as an example for description. In an actual application, the foregoing functions may be assigned to different functional modules and implemented according to a need, that is, an internal structure of the apparatus is divided into different functional modules to complete all or a part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the division of modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, a network device, or the like) or a processor (processor) to perform all or a part of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from scope of the technical solutions of the embodiments of the present invention.

## Claims

1. An interference coordination method, comprising:
determining (101), by a radio network controller, RNC, an uplink capacity target of a macro cell with a plurality of micro cells in a coverage range of the macro cell, and assigning, by the RNC, an uplink interference level to each micro cell according to the uplink capacity target; and
sending (102), by the RNC, a control message to a micro cell gateway, a micro cell base station controller, or a micro cell base station of one of said plurality of micro cells;
using, by the micro cell gateway, the micro cell base station controller, or the micro cell base station of one of said plurality of micro cells, the control message to control uplink interference of the micro cell to the macro cell after acquiring the uplink interference level by controlling an uplink power of a user equipment accessing the micro cell according to the acquired control message, so as to reduce co-channel interference caused by the micro cell to the macro cell,
, wherein the assigning the uplink interference level to the micro cell according to the uplink capacity target comprises:
assigning the uplink interference level to the micro cell according to the uplink capacity target and in combination with a deployment situation of the micro cell, wherein the deployment situation of the micro cell comprises: location information of the micro cell and/or coverage capability information of the micro cell, and the assigning the uplink interference level to the micro cell according to the uplink capacity target and in combination with the deployment situation of the micro cell comprises:
assigning the uplink interference level to the micro cell according to the uplink capacity target and in combination with the location information of the micro cell; and/or
assigning the uplink interference level to the micro cell according to the uplink capacity target and in combination with the coverage capability information of the micro cell.

2. The method according to claim 1, wherein the uplink capacity target of the macro cell comprises maximum target received total wideband power or a rise over thermal, ROT, of the macro cell.

3. The method according to claim 1, wherein the coverage capability information of the micro cell comprises: power of the micro cell and/or a range extension value of the micro cell, wherein the range extension value of the micro cell is used to represent a degree of range extension of the micro cell.

4. The method according to claim 1, wherein the assigning the uplink interference level to the micro cell according to the uplink capacity target and in combination with the location information of the micro cell comprises:
if a distance between the micro cell and the macro cell is greater than or equal to a first distance threshold value, determining that the uplink interference level assigned to the micro cell is higher than or equal to a first uplink interference threshold value; and if the distance between the micro cell and the macro cell is smaller than or equal to the first distance threshold value, determining that the uplink interference level assigned to the micro cell is lower than or equal to the first uplink interference threshold value, wherein the first distance threshold value and the first uplink interference threshold value are preset;
alternatively, the assigning the uplink interference level to the micro cell according to the uplink capacity target and in combination with the coverage capability information of the micro cell comprises:
if a coverage capability of the micro cell is higher than or equal to a first coverage threshold value, determining that the uplink interference level assigned to the micro cell is lower than or equal to a second uplink interference threshold value; and if the coverage capability of the micro cell is lower than or equal to the first coverage threshold value, determining that the uplink interference level assigned to the micro cell is higher than or equal to the second uplink interference threshold value, wherein the first coverage threshold value and the second uplink interference threshold value are preset.

5. The method according to any one of claims 1 to 4, wherein the control message carries an uplink power control parameter, the uplink power control parameter comprises one or more of the following: the maximum target received total wideband power and the rise over thermal of the macro cell, different parameter levels, a proportionality coefficient corresponding to each parameter level, and classification information of each parameter level, and the uplink power control parameter is used by the micro cell to determine the uplink interference level of the micro cell.

6. The method according to claim 5, wherein the determining, by the micro cell, the uplink interference level of the micro cell comprises:
determining, by the micro cell, a corresponding parameter level according to the location information and/or the coverage capability information of the micro cell, so as to determine a proportionality coefficient, and determining maximum target received total wideband power of the micro cell according to the proportionality coefficient and the maximum target received total wideband power of the macro cell; or
determining, by the micro cell, a corresponding parameter level according to the location information and/or the coverage capability information of the micro cell so as to determine a proportionality coefficient, and determining a rise over thermal of the micro cell according to the proportionality coefficient and the rise over thermal of the macro cell.

7. An interference coordination apparatus being a radio network controller, RNC, comprising:
an assigning unit (81), configured to determine an uplink capacity target of a macro cell with a plurality of micro cells in a coverage range of the macro cell, and assign an uplink interference level to each micro cell according to the uplink capacity target; and
an interference control unit (82), configured to send a control message to a micro cell gateway, a micro cell base station controller, or a micro cell base station of one of said plurality of micro cells, wherein the control message is used to control uplink interference of the micro cell to the macro cell by controlling an uplink power of a user equipment accessing the micro cell after the uplink interference level is acquired according to the acquired control message, so as to reduce co-channel interference caused by the micro cell to the macro cell, wherein the assigning unit (81) comprises:
a processing module (812), configured to assign the uplink interference level to the micro cell according to the uplink capacity target and in combination with a deployment situation of the micro cell and further configured to assign the uplink interference level to the micro cell according to location information of the micro cell and/or coverage capability information of the micro cell, wherein the coverage capability information of the micro cell comprises: power of the micro cell and/or a range extension value of the micro cell, wherein the range extension value of the cell is used to represent a degree of range extension of the micro cell.

8. The apparatus according to claim 7, wherein the uplink capacity target that is of the macro cell and determined by the assigning unit comprises maximum target received total wideband power or a rise over thermal, ROT, of the macro cell.

9. The apparatus according to claim 7, wherein the processing module (812) is further configured to: if a distance between the micro cell and the macro cell is greater than or equal to a first distance threshold value, determine that the uplink interference level assigned to the micro cell is higher than or equal to a first uplink interference threshold value; and if the distance between the micro cell and the macro cell is smaller than or equal to the first distance threshold value, determine that the uplink interference level assigned to the micro cell is lower than or equal to the first uplink interference threshold value, wherein the first distance threshold value and the first uplink interference threshold value are preset; and/or
the processing module (812) is further configured to: if a coverage capability of the micro cell is higher than or equal to a first coverage threshold value, determine that the uplink interference level assigned to the micro cell is lower than or equal to a second uplink interference threshold value; and if the coverage capability of the micro cell is lower than or equal to the first coverage threshold value, determine that the uplink interference level assigned to the micro cell is higher than or equal to the second uplink interference threshold value, wherein the first coverage threshold value and the second uplink interference threshold value are preset.

10. The apparatus according to any one of claims 7 to 9, wherein the control message sent by the interference control unit (82) carries an uplink power control parameter, wherein the uplink power control parameter comprises one or more of the following: the maximum target received total wideband power of the macro cell, the rise over thermal of the macro cell, different parameter levels, a proportionality coefficient corresponding to each parameter level, and classification information of each parameter level, and the uplink power control parameter is used by the micro cell to determine the uplink interference level of the micro cell.

11. System with an apparatus according to any of claims 7 to 10 and an other interference coordination apparatus, the other interference apparatus comprising:
a second receiving unit (121), configured to receive a control message delivered by a radio network controller, RNC; and
a power control unit (122), configured to control uplink interference of a current micro cell to the macro cell according to the control message.

12. The system according to claim 11, wherein the control message received by the second receiving unit (121) carries an uplink power control parameter, wherein the uplink power control parameter comprises one or more of the following: maximum target received total wideband power of a macro cell, a rise over thermal of the macro cell, different parameter levels, a proportionality coefficient corresponding to each parameter level, and classification information of each parameter level; and
the power control unit (122) is further configured to determine a corresponding parameter level according to location information and/or coverage capability information of the current micro cell, further determine a proportionality coefficient, and determine maximum target received total wideband power of the micro cell according to the proportionality coefficient and the maximum target received total wideband power of the macro cell; or
the power control unit (122) is further configured to determine a corresponding parameter level according to location information and/or coverage capability information of the current micro cell, further determine a proportionality coefficient, and determine a rise over thermal of the current micro cell according to the proportionality coefficient and the rise over thermal of the macro cell.

## Patentansprüche

1. Verfahren zur Interferenzkoordinierung, das Folgendes umfasst:
Bestimmen (101), durch eine Funknetzwerksteuerung (RNC, Radio Network Controller), eines Uplink-Kapazitätsziels einer Makrozelle mit mehreren Mikrozellen in einem Abdeckungsbereich der Makrozelle, und Zuweisen, durch die RNC, eines Uplink-Interferenzniveaus zu jeder Mikrozelle gemäß dem Uplink-Kapazitätsziel; und
Senden (102), durch die RNC, einer Steuernachricht an ein Mikrozellen-Gateway, eine Mikrozellen-Basisstationssteuerung oder eine Mikrozellen-Basisstation einer der mehreren Mikrozellen;
Verwenden, durch das Mikrozellen-Gateway, die Mikrozellen-Basisstationssteuerung oder die Mikrozellen-Basisstation einer der mehreren Mikrozellen, der Steuernachricht zum Steuern von Uplink-Interferenz der Mikrozelle zur Makrozelle nach Erfassen des Uplink-Interferenzniveaus durch Steuern einer Uplink-Leistung eines auf die Mikrozelle zugreifenden Benutzergeräts gemäß der erfassten Steuernachricht, um die durch die Mikrozelle zur Makrozelle verursachte Ko-Kanal-Interferenz zu verringern,
wobei das Zuweisen des Uplink-Interferenzniveaus zur Mikrozelle gemäß dem Uplink-Kapazitätsziel Folgendes umfasst:
Zuweisen des Uplink-Interferenzniveaus zur Mikrozelle gemäß dem Uplink-Kapazitätsziel und in Kombination mit einer Bereitstellungssituation der Mikrozelle, wobei die Bereitstellungssituation der Mikrozelle Folgendes umfasst: Positionsinformationen der Mikrozelle und/oder Abdeckungsfähigkeitsinformationen der Mikrozelle, und wobei das Zuweisen des Uplink-Interferenzniveaus zur Mikrozelle gemäß dem Uplink-Kapazitätsziel und in Kombination mit der Bereitstellungssituation der Mikrozelle Folgendes umfasst:
Zuweisen des Uplink-Interferenzniveaus zur Mikrozelle gemäß dem Uplink-Kapazitätsziel und in Kombination mit den Positionsinformationen der Mikrozelle; und/oder Zuweisen des Uplink-Interferenzniveaus zur Mikrozelle gemäß dem Uplink-Kapazitätsziel und in Kombination mit den Abdeckungsfähigkeitsinformationen der Mikrozelle.

2. Verfahren nach Anspruch 1, wobei das Uplink-Kapazitätsziel der Makrozelle eine maximale empfangene Zielbreitbandleistung oder einen Rise-over-Thermal (ROT) der Makrozelle umfasst.

3. Verfahren nach Anspruch 1, wobei die Abdeckungsfähigkeitsinformationen der Mikrozelle Folgendes umfassen: Leistung der Mikrozelle und/oder einen Bereichserweiterungswert der Mikrozelle, wobei der Bereichserweiterungswert der Mikrozelle verwendet wird, um einen Grad von Bereichserweiterung der Mikrozelle darzustellen.

4. Verfahren nach Anspruch 1, wobei das Zuweisen des Uplink-Interferenzniveaus zur Mikrozelle gemäß dem Uplink-Kapazitätsziel und in Kombination mit den Positionsinformationen der Mikrozelle Folgendes umfasst:
wenn ein Abstand zwischen der Mikrozelle und der Makrozelle größer als oder gleich einem ersten Abstandsschwellenwert ist, Bestimmen, dass das der Mikrozelle zugewiesene Uplink-Interferenzniveau höher als oder gleich einem ersten Uplink-Interferenzschwellenwert ist; und wenn der Abstand zwischen der Mikrozelle und der Makrozelle kleiner als oder gleich dem ersten Abstandsschwellenwert ist, Bestimmen, dass das der Mikrozelle zugewiesene Uplink-Interferenzniveau niedriger als oder gleich dem ersten Uplink-Interferenzschwellenwert ist, wobei der erste Abstandsschwellenwert und der erste Uplink-Interferenzschwellenwert vorab festgelegt sind;
wobei, alternativ, das Zuweisen des Uplink-Interferenzniveaus zur Mikrozelle gemäß dem Uplink-Kapazitätsziel und in Kombination mit den Abdeckungsfähigkeitsinformationen der Mikrozelle Folgendes umfasst:
wenn die Abdeckungsfähigkeit der Mikrozelle höher als oder gleich einem ersten Abdeckungsschwellenwert ist, Bestimmen, dass das der Mikrozelle zugewiesene Uplink-Interferenzniveau niedriger als oder gleich einem zweiten Uplink-Interferenzschwellenwert ist; und wenn die Abdeckungsfähigkeit der Mikrozelle niedriger als oder gleich dem ersten Abdeckungsschwellenwert ist, Bestimmen, dass das der Mikrozelle zugewiesene Uplink-Interferenzniveau höher als oder gleich dem zweiten Uplink-Interferenzschwellenwert ist, wobei der erste Abdeckungsschwellenwert und der zweite Uplink-Interferenzschwellenwert vorab festgelegt sind.

5. Verfahren nach einem der Ansprüche 1 bis 4, wobei die Steuernachricht einen Uplink-Leistungssteuerungsparameter trägt, wobei der Uplink-Leistungssteuerungsparameter eines oder mehrere von Folgendem umfasst: die maximale empfangene Zielbreitbandleistung und den Rise-over-Thermal der Makrozelle, unterschiedliche Parameterniveaus, einen Proportionalitätskoeffizienten entsprechend jedem Parameterniveau, und Klassifizierungsinformationen jedes Parameterniveaus, und wobei der Uplink-Leistungssteuerungsparameter durch die Mikrozelle verwendet wird, um das Uplink-Interferenzniveau der Mikrozelle zu bestimmen.

6. Verfahren nach Anspruch 5, wobei das Bestimmen, durch die Mikrozelle, des Uplink-Interferenzniveaus der Mikrozelle Folgendes umfasst:
Bestimmen, durch die Mikrozelle, eines entsprechenden Parameterniveaus gemäß den Positionsinformationen und/oder den Abdeckungsfähigkeitsinformationen der Mikrozelle, um einen Proportionalitätskoeffizienten zu bestimmen, und Bestimmen einer maximalen empfangenen Zielbreitbandleistung der Mikrozelle gemäß dem Proportionalitätskoeffizienten und der maximalen empfangenen Zielbreitbandleistung der Makrozelle; oder
Bestimmen, durch die Mikrozelle, eines entsprechenden Parameterniveaus gemäß den Positionsinformationen und/oder den Abdeckungsfähigkeitsinformationen der Mikrozelle, um einen Proportionalitätskoeffizienten zu bestimmen, und Bestimmen eines Rise-over-Thermal der Mikrozelle gemäß dem Proportionalitätskoeffizienten und dem Rise-over-Thermal der Makrozelle.

7. Vorrichtung zur Interferenzkoordinierung, die eine Funknetzwerksteuerung (RNC, Radio Network Controller) ist, Folgendes umfassend:
eine Zuweisungseinheit (81), ausgelegt zum Bestimmen eines Uplink-Kapazitätsziels einer Makrozelle mit mehreren Mikrozellen in einem Abdeckungsbereich der Makrozelle, und Zuweisen eines Uplink-Interferenzniveaus zu jeder Mikrozelle gemäß dem Uplink-Kapazitätsziel; und
eine Interferenzsteuerungseinheit (82), ausgelegt zum Senden einer Steuernachricht an ein Mikrozellen-Gateway, eine Mikrozellen-Basisstationssteuerung oder eine Mikrozellen-Basisstation einer der mehreren Mikrozellen, wobei die Steuernachricht verwendet wird, um Uplink-Interferenz der Mikrozelle zur Makrozelle zu steuern durch Steuern einer Uplink-Leistung eines auf die Mikrozelle zugreifenden Benutzergeräts, nachdem das Uplink-Interferenzniveau gemäß der erfassten Steuernachricht erfasst wird, um die durch die Mikrozelle zur Makrozelle verursachte Ko-Kanal-Interferenz zu verringern, wobei die Zuweisungseinheit (81) Folgendes umfasst:
ein Verarbeitungsmodul (812), ausgelegt zum Zuweisen des Uplink-Interferenzniveaus zur Mikrozelle gemäß dem Uplink-Kapazitätsziel und in Kombination mit einer Bereitstellungssituation der Mikrozelle und ferner ausgelegt zum Zuweisen des Uplink-Interferenzniveaus zur Mikrozelle gemäß Positionsinformationen der Mikrozelle und/oder Abdeckungsfähigkeitsinformationen der Mikrozelle, wobei die Abdeckungsfähigkeitsinformationen der Mikrozelle Folgendes umfassen: Leistung der Mikrozelle und/oder einen Bereichserweiterungswert der Mikrozelle, wobei der Bereichserweiterungswert der Zelle verwendet wird, um einen Grad von Bereichserweiterung der Mikrozelle darzustellen.

8. Vorrichtung nach Anspruch 7, wobei das Uplink-Kapazitätsziel, das von der Makrozelle ist und durch die Zuweisungseinheit bestimmt wird, eine maximale empfangene Zielbreitbandleistung oder einen Rise-over-Thermal (ROT) der Makrozelle umfasst.

9. Vorrichtung nach Anspruch 7, wobei das Verarbeitungsmodul (812) ferner ausgelegt ist zum: wenn ein Abstand zwischen der Mikrozelle und der Makrozelle größer als oder gleich einem ersten Abstandsschwellenwert ist, Bestimmen, dass das der Mikrozelle zugewiesene Uplink-Interferenzniveau höher als oder gleich einem ersten Uplink-Interferenzschwellenwert ist; und wenn der Abstand zwischen der Mikrozelle und der Makrozelle kleiner als oder gleich dem ersten Abstandsschwellenwert ist, Bestimmen, dass das der Mikrozelle zugewiesene Uplink-Interferenzniveau niedriger als oder gleich dem ersten Uplink-Interferenzschwellenwert ist, wobei der erste Abstandsschwellenwert und der erste Uplink-Interferenzschwellenwert vorab festgelegt sind; und/oder das Verarbeitungsmodul (812) ferner ausgelegt ist zum: wenn die Abdeckungsfähigkeit der Mikrozelle höher als oder gleich einem ersten Abdeckungsschwellenwert ist, Bestimmen, dass das der Mikrozelle zugewiesene Uplink-Interferenzniveau niedriger als oder gleich einem zweiten Uplink-Interferenzschwellenwert ist; und wenn die Abdeckungsfähigkeit der Mikrozelle niedriger als oder gleich dem ersten Abdeckungsschwellenwert ist, Bestimmen, dass das der Mikrozelle zugewiesene Uplink-Interferenzniveau höher als oder gleich dem zweiten Uplink-Interferenzschwellenwert ist, wobei der erste Abdeckungsschwellenwert und der zweite Uplink-Interferenzschwellenwert vorab festgelegt sind.

10. Vorrichtung nach einem der Ansprüche 7 bis 9, wobei die durch die Interferenzsteuerungseinheit (82) gesendete Steuernachricht einen Uplink-Leistungssteuerungsparameter trägt, wobei der Uplink-Leistungssteuerungsparameter eines oder mehrere von Folgendem umfasst: die maximale empfangene Zielbreitbandleistung der Makrozelle, den Rise-over-Thermal der Makrozelle, unterschiedliche Parameterniveaus, einen Proportionalitätskoeffizienten entsprechend jedem Parameterniveau, und Klassifizierungsinformationen jedes Parameterniveaus, und wobei der Uplink-Leistungssteuerungsparameter durch die Mikrozelle verwendet wird, um das Uplink-Interferenzniveau der Mikrozelle zu bestimmen.

11. System mit einer Vorrichtung nach einem der Ansprüche 7 bis 10 und eine weitere Vorrichtung zur Interferenzkoordinierung, wobei die weitere Interferenzvorrichtung Folgendes umfasst:
eine zweite Empfangseinheit (121), ausgelegt zum Empfangen einer durch eine Funknetzwerksteuerung (RNC, Radio Network Controller) zugestellten Steuernachricht; und
eine Leistungssteuerungseinheit (122), ausgelegt zum Steuern von Uplink-Interferenz einer aktuellen Mikrozelle zur Makrozelle gemäß der Steuernachricht.

12. System nach Anspruch 11, wobei die durch die zweite Empfangseinheit (121) empfangene Steuernachricht einen Uplink-Leistungssteuerungsparameter trägt, wobei der Uplink-Leistungssteuerungsparameter eines oder mehrere von Folgendem umfasst:
maximale empfangene Zielbreitbandleistung einer Makrozelle, einen Rise-over-Thermal der Makrozelle, unterschiedliche Parameterniveaus, einen Proportionalitätskoeffizienten entsprechend jedem Parameterniveau, und Klassifizierungsinformationen jedes Parameterniveaus; und
die Leistungssteuerungseinheit (122) ferner ausgelegt ist zum Bestimmen eines entsprechenden Parameterniveaus gemäß Positionsinformationen und/oder Abdeckungsfähigkeitsinformationen der aktuellen Mikrozelle, ferner Bestimmen eines Proportionalitätskoeffizienten und Bestimmen einer maximalen empfangenen Zielbreitbandleistung der Mikrozelle gemäß dem Proportionalitätskoeffizienten und der maximalen empfangenen Zielbreitbandleistung der Makrozelle; oder
die Leistungssteuerungseinheit (122) ferner ausgelegt ist zum Bestimmen eines entsprechenden Parameterniveaus gemäß Positionsinformationen und/oder Abdeckungsfähigkeitsinformationen der aktuellen Mikrozelle, ferner Bestimmen eines Proportionalitätskoeffizienten und Bestimmen eines Rise-over-Thermal der aktuellen Mikrozelle gemäß dem Proportionalitätskoeffizienten und dem Rise-over-Thermal der Makrozelle.

## Revendications

1. Procédé de coordination d'interférence, comprenant :
la détermination (101), par un contrôleur de réseau radio, noté RNC, d'une cible de capacité en voie montante d'une cellule macro comportant une pluralité de cellules micro dans un rayon de couverture de la cellule macro, et l'assignation, par le RNC, d'un niveau d'interférence en voie montante à chaque cellule micro selon la cible de capacité en voie montante ; et
l'envoi (102), par le RNC, d'un message de régulation à une passerelle de cellule micro, un contrôleur de station de base de cellule micro ou une station de base de cellule micro d'une de ladite pluralité de cellules micro ;
l'utilisation, par la passerelle de cellule micro, le contrôleur de station de base de cellule micro ou la station de base de cellule micro d'une de ladite pluralité de cellules micro, du message de régulation pour réguler l'interférence en voie montante de la cellule micro sur la cellule macro suite à l'acquisition du niveau d'interférence en voie montante par régulation d'une puissance en voie montante d'un équipement utilisateur qui accède à la cellule micro selon le message de régulation acquis, dans le but de réduire l'interférence co-canal due à la cellule micro sur la cellule macro, l'assignation du niveau d'interférence en voie montante à la cellule micro selon la cible de capacité en voie montante comprenant :
l'assignation du niveau d'interférence en voie montante à la cellule micro selon la cible de capacité en voie montante et en association avec une situation de déploiement de la cellule micro, la situation de déploiement de la cellule micro comprenant : des informations de localisation relatives à la cellule micro et/ou des informations de capacité de couverture relatives à la cellule micro, et l'assignation du niveau d'interférence en voie montante à la cellule micro selon la cible de capacité en voie montante et en association avec la situation de déploiement de la cellule micro comprenant :
l'assignation du niveau d'interférence en voie montante à la cellule micro selon la cible de capacité en voie montante et en association avec les informations de localisation relatives à la cellule micro ; et/ou
l'assignation du niveau d'interférence en voie montante à la cellule micro selon la cible de capacité en voie montante et en association avec les informations de capacité de couverture relatives à la cellule micro.

2. Procédé selon la revendication 1, dans lequel la cible de capacité en voie montante de la cellule macro comprend une puissance totale reçue en large bande cible maximale ou un bruit en excès par rapport au bruit thermique, noté ROT, de la cellule macro.

3. Procédé selon la revendication 1, dans lequel les informations de capacité de couverture relatives à la cellule micro comprennent : une puissance de la cellule micro et/ou une valeur d'extension de rayon de la cellule micro, la valeur d'extension de rayon de la cellule micro servant à représenter un degré d'extension de rayon de la cellule micro.

4. Procédé selon la revendication 1, dans lequel l'assignation du niveau d'interférence en voie montante à la cellule micro selon la cible de capacité en voie montante et en association avec les informations de localisation relatives à la cellule micro comprend :
si une distance entre la cellule micro et la cellule macro est supérieure ou égale à une première valeur de seuil de distance, la détermination que le niveau d'interférence en voie montante assigné à la cellule micro est supérieur ou égal à une première valeur de seuil d'interférence en voie montante ; et, si la distance entre la cellule micro et la cellule macro est inférieure ou égale à la première valeur de seuil de distance, la détermination que le niveau d'interférence en voie montante assigné à la cellule micro est inférieur ou égal à la première valeur de seuil d'interférence en voie montante, la première valeur de seuil de distance et la première valeur de seuil d'interférence en voie montante étant préétablies ;
en variante, l'assignation du niveau d'interférence en voie montante à la cellule micro selon la cible de capacité en voie montante et en association avec les informations de capacité de couverture relatives à la cellule micro comprend :
si une capacité de couverture de la cellule micro est supérieure ou égale à une première valeur de seuil de couverture, la détermination que le niveau d'interférence en voie montante assigné à la cellule micro est inférieur ou égal à une deuxième valeur de seuil d'interférence en voie montante ; et, si la capacité de couverture de la cellule micro est inférieure ou égale à la première valeur de seuil de couverture, la détermination que le niveau d'interférence en voie montante assigné à la cellule micro est supérieur ou égal à la deuxième valeur de seuil d'interférence en voie montante, la première valeur de seuil de couverture et la deuxième valeur de seuil d'interférence en voie montante étant préétablies.

5. Procédé selon l'une quelconque des revendications 1 à 4, dans lequel le message de régulation véhicule un paramètre de régulation de puissance en voie montante, le paramètre de régulation de puissance en voie montante comprend un ou plusieurs éléments dans le groupe constitué par : la puissance totale reçue en large bande cible maximale et le bruit en excès par rapport au bruit thermique de la cellule macro, différents niveaux de paramètre, un coefficient de proportionnalité correspondant à chaque niveau de paramètre, et des informations de classification relatives à chaque niveau de paramètre, et le paramètre de régulation de puissance en voie montante est utilisé par la cellule micro pour déterminer le niveau d'interférence en voie montante de la cellule micro.

6. Procédé selon la revendication 5, dans lequel la détermination, par la cellule micro, du niveau d'interférence en voie montante de la cellule micro comprend :
la détermination, par la cellule micro, d'un niveau de paramètre correspondant selon les informations de localisation et/ou les informations de capacité de couverture relatives à la cellule micro dans le but de déterminer un coefficient de proportionnalité, et la détermination d'une puissance totale reçue en large bande cible maximale de la cellule micro selon le coefficient de proportionnalité et la puissance totale reçue en large bande cible maximale de la cellule macro ; ou
la détermination, par la cellule micro, d'un niveau de paramètre correspondant selon les informations de localisation et/ou les informations de capacité de couverture relatives à la cellule micro dans le but de déterminer un coefficient de proportionnalité, et la détermination d'un bruit en excès par rapport au bruit thermique de la cellule micro selon le coefficient de proportionnalité et le bruit en excès par rapport au bruit thermique de la cellule macro.

7. Appareil de coordination d'interférence consistant en un contrôleur de réseau radio, noté RNC, comprenant :
une unité d'assignation (81), configurée pour déterminer une cible de capacité en voie montante d'une cellule macro comportant une pluralité de cellules micro dans un rayon de couverture de la cellule macro, et assigner un niveau d'interférence en voie montante à chaque cellule micro selon la cible de capacité en voie montante ; et
une unité de régulation d'interférence (82), configurée pour envoyer un message de régulation à une passerelle de cellule micro, un contrôleur de station de base de cellule micro ou une station de base de cellule micro d'une de ladite pluralité de cellules micro, le message de régulation servant à réguler l'interférence en voie montante de la cellule micro sur la cellule macro par régulation d'une puissance en voie montante d'un équipement utilisateur qui accède à la cellule micro suite à l'acquisition du niveau d'interférence en voie montante selon le message de régulation acquis, dans le but de réduire l'interférence co-canal due à la cellule micro sur la cellule macro, l'unité d'assignation (81) comprenant :
un module de traitement (812), configuré pour assigner le niveau d'interférence en voie montante à la cellule micro selon la cible de capacité en voie montante et en association avec une situation de déploiement de la cellule micro, et configuré en outre pour assigner le niveau d'interférence en voie montante à la cellule micro selon des informations de localisation relatives à la cellule micro et/ou des informations de capacité de couverture relatives à la cellule micro, les informations de capacité de couverture relatives à la cellule micro comprenant : une puissance de la cellule micro et/ou une valeur d'extension de rayon de la cellule micro, la valeur d'extension de rayon de la cellule micro servant à représenter un degré d'extension de rayon de la cellule micro.

8. Appareil selon la revendication 7, dans lequel la cible de capacité en voie montante relative à la cellule macro et déterminée par l'unité d'assignation comprend une puissance totale reçue en large bande cible maximale ou un bruit en excès par rapport au bruit thermique, noté ROT, de la cellule macro.

9. Appareil selon la revendication 7, dans lequel le module de traitement (812) est configuré en outre pour : si une distance entre la cellule micro et la cellule macro est supérieure ou égale à une première valeur de seuil de distance, déterminer que le niveau d'interférence en voie montante assigné à la cellule micro est supérieur ou égal à une première valeur de seuil d'interférence en voie montante ; et, si la distance entre la cellule micro et la cellule macro est inférieure ou égale à la première valeur de seuil de distance, déterminer que le niveau d'interférence en voie montante assigné à la cellule micro est inférieur ou égal à la première valeur de seuil d'interférence en voie montante, la première valeur de seuil de distance et la première valeur de seuil d'interférence en voie montante étant préétablies ; et/ou le module de traitement (812) est configuré en outre pour : si une capacité de couverture de la cellule micro est supérieure ou égale à une première valeur de seuil de couverture, déterminer que le niveau d'interférence en voie montante assigné à la cellule micro est inférieur ou égal à une deuxième valeur de seuil d'interférence en voie montante ; et, si la capacité de couverture de la cellule micro est inférieure ou égale à la première valeur de seuil de couverture, déterminer que le niveau d'interférence en voie montante assigné à la cellule micro est supérieur ou égal à la deuxième valeur de seuil d'interférence en voie montante, la première valeur de seuil de couverture et la deuxième valeur de seuil d'interférence en voie montante étant préétablies.

10. Appareil selon l'une quelconque des revendications 7 à 9, dans lequel le message de régulation envoyé par l'unité de régulation d'interférence (82) véhicule un paramètre de régulation de puissance en voie montante, le paramètre de régulation de puissance en voie montante comprenant un ou plusieurs éléments dans le groupe constitué par : la puissance totale reçue en large bande cible maximale, le bruit en excès par rapport au bruit thermique de la cellule macro, différents niveaux de paramètre, un coefficient de proportionnalité correspondant à chaque niveau de paramètre, et des informations de classification relatives à chaque niveau de paramètre, et le paramètre de régulation de puissance en voie montante étant utilisé par la cellule micro pour déterminer le niveau d'interférence en voie montante de la cellule micro.

11. Système doté d'un appareil selon l'une quelconque des revendications 7 à 10 et d'un autre appareil de coordination d'interférence, l'autre appareil de coordination d'interférence comprenant :
une deuxième unité de réception (121), configurée pour recevoir un message de régulation délivré par un contrôleur de réseau radio, noté RNC ; et
une unité de régulation de puissance (122), configurée pour réguler l'interférence en voie montante d'une cellule micro actuelle sur la cellule macro selon le message de régulation.

12. Système selon la revendication 11, dans lequel le message de régulation reçu par le deuxième unité de réception (121) véhicule un paramètre de régulation de puissance en voie montante, le paramètre de régulation de puissance en voie montante comprenant un ou plusieurs éléments dans le groupe constitué par : une puissance totale reçue en large bande cible maximale, un bruit en excès par rapport au bruit thermique de la cellule macro, différents niveaux de paramètre, un coefficient de proportionnalité correspondant à chaque niveau de paramètre, et des informations de classification relatives à chaque niveau de paramètre ; et
l'unité de régulation de puissance (122) est configurée en outre pour déterminer un niveau de paramètre correspondant selon des informations de localisation et/ou des informations de capacité de couverture relatives à la cellule micro actuelle, déterminer en outre un coefficient de proportionnalité, et déterminer une puissance totale reçue en large bande cible maximale de la cellule micro selon le coefficient de proportionnalité et la puissance totale reçue en large bande cible maximale de la cellule macro ; ou
l'unité de régulation de puissance (122) est configurée en outre pour déterminer un niveau de paramètre correspondant selon des informations de localisation et/ou des informations de capacité de couverture relatives à la cellule micro actuelle, déterminer en outre un coefficient de proportionnalité, et déterminer un bruit en excès par rapport au bruit thermique de la cellule micro actuelle selon le coefficient de proportionnalité et le bruit en excès par rapport au bruit thermique de la cellule macro.
